# EUROPEAN PATENT SPECIFICATION

(11) **EP 2 886 910 B1**
(45) Date of publication and mention of the grant of the patent: **01.04.2020**
(21) Application number: 13199221.6
(22) Date of filing: 20.12.2013
(51) Int. Cl.: F16H 57/022

(54) **Gear, gear train, engine, use thereof and method for mating such gear with at least one further gear with a predetermined backlash**
Getriebe, Getriebezug, Motor, Verwendung dafür und Verfahren zur Verbindung dieses Getriebes mit mindestens einem weiteren Getriebe mit einer vorbestimmten Gegenreaktion
Engrenage, train d'engrenage, moteur, son utilisation et procédé pour adapter un tel engrenage avec au moins un autre rapport avec un jeu prédéterminé

(43) Date of publication of application: 24.06.2015
(73) Proprietor: VCST Industrial Products, 3800 Sint-Truiden (BE)
(72) Inventor: Vandewal, Bart, 3570 Alken (BE)
(74) Representative: Duyver, Jurgen Martha Herman

(56) References cited:
- WO-A1-80/02677
- WO-A2-2008/145741
- US-A- 5 540 112

## Description

The present invention relates to a gear according to the preamble of the first claim, and as it is disclosed in US5540112A.

The tooth profile interlocking clearance between two mating gears of, for example a gear transmission, the backlash, and in particular the rotational backlash, is known to create a hydrodynamic lubrication, compensating for dimensional changes caused by temperature effects, preventing abrasion or premature wear of the shaft, axles and toothed gears, and compensating bad construction and assembly work. In the serial production of engines, gears or other aggregates, providing a predetermined backlash to two or more toothed gears in mesh (serrated, helical, or other) pressed, screwed or secured otherwise onto driven or secondary shafts, requires elaborate alignment equipment or alignment devices.

WO9300530 for example describes an idler gear and a method for providing a predetermined backlash to an idler gear and two gears mating with the idler gear.

However, with an idler gear according to WO9300530, it remains difficult to provide a predetermined backlash of the idler gear and the two gears mating with the idler gear as positioning the centre of rotation of the gear ring is quite arbitrary and still elaborate alignment is required.

WO 2008/145741 A2 describes an idler gear wherein the position of the gear with respect to another gear can be adjusted by rotating an eccentric fixed bearing around a bolt. After adjusting, the bolt can then be tightened to fix the adjustment position.

However, with an idler gear according to WO 2008/145741 A2, it remains difficult to fine-tune the adjustment position as it requires repeating the untightening and tightening of the bolt and the rotating of the eccentric fixed bearing until the optimal adjustment is achieved.

Therefore, it is an object of the present invention to provide a gear with which the backlash between the gear and at least one further gear can be more easily established.

This is achieved according to the present invention with the technical features of the characterizing part of the first claim.

Thereto, the gear comprises displacement means in the axial gear hub opening, the displacement means being provided for predeterminedly translating the centre of rotation of the gear ring by moving the gear ring and the gear hub with respect to the centre of rotation of at least one further gear from a first predetermined position in which the gear mates with the at least one further gear with substantially no backlash to a second predetermined position in which the gear mates with the at least one further gear with a predetermined backlash.

Such displacement means have been found to more easily allow positioning the gear with respect to the at least one further gear with a predetermined backlash as the operator mounting the gear to the at least one further gear only needs to put the gear in the first predetermined position with respect to the at least one further gear after which the displacement means will allow a predetermined translation of the centre of rotation of the gear ring from that first position to the second predetermined position in which the gear mates with the at least one further gear with a predetermined backlash.

As such configuration has been found to allow only very specific movements of the centre of rotation of the gear ring, it has been found that the predetermined translational movement of the centre of rotation of the gear ring can be relatively easy established. Furthermore, a rotational motion of the gear ring with respect to the gear hub, as for example seen during operation, will not influence the position of the centre of rotation of the ring gear.

It has been found that such configuration is a relative easy and reliable way to obtain the effect that upon rotation of the gear hub around the inner hub, the centre of rotation of the gear ring is predeterminedly translated such as to create the predetermined backlash.

According to more preferred embodiments of the gear according to the present invention, the gear hub opening is eccentric with respect to the gear ring.

According to alternative embodiments of the gear according to the present invention, the inner hub is eccentrically positioned in the gear hub opening and the gear hub opening is concentric with respect to the gear hub.

Such a gear further indicates to an operator mounting the gear to the at least one further gear how the predetermined translation of the centre of rotation of the gear ring can be obtained, making it even more easy to obtain the desired predetermined backlash. In addition it has been found that such marks can be easily applied without affecting the working of the gear ring, for example by printing, welding, soldering, forging, gluing, etc.

Such a gear further indicates to an operator mounting the gear to the at least one further gear how the predetermined translation of the centre of rotation of the gear ring can be obtained, making it even more easy to obtain the desired predetermined backlash. In addition it has been found that such marks can be easily applied without affecting the working of the gear ring, for example by printing, welding, soldering, forging, gluing, etc.

According to further preferred embodiments of the gear according to the present invention, at least one of the marks of the second pair of marks is one of marks of the first pair of marks. For example, the inner hub could only have one mark whereas the gear hub has two marks such that in the first predetermined position the mark of the inner hub coincides with a first of the marks on the gear hub and in the second predetermined position the mark of the inner hub coincides with the a second of the marks on the gear hub, different from the first of the marks on the gear hub. Alternatively, the gear hub could only have one mark whereas the inner hub has two marks such that in the first predetermined position the mark of the gear hub coincides with a first of the marks on the inner hub and in the second predetermined position the mark of the gear hub coincides with the a second of the marks on the inner hub, different from the first of the marks on the inner hub.

Such fixation of the gear hub has been found relatively easy to do and is reversible such that the predetermined backlash can be reestablished after, for example, the gear had to be removed, for example, during reparations. The bolting hole may for example be located in the gear hub or in the inner hub.

According to preferred embodiments of the gear according to the present invention, the inner hub is connected to the gear hub with a transition fit. Such a fit has been found to allow rotation of the gear hub with respect to the inner hub, for example during assembly or reparation procedures, whereas, while the gear is in use, has a relative low risk that the predetermined backlash changes by movement of the gear hub with respect to the inner hub.

According to the present invention, the inner hub comprises at least one bolting hole for fixing the position of the centre of rotation of the gear ring in the second predetermined position by bolting.

The invention also relates to a gear train with a gear, preferably an idler gear, according to the present invention, mating with at least one further gear, preferably at least two further gears.

According to preferred embodiments of the gear train according to the present invention, the gear mates with the at least one further gear with the predetermined backlash.

The invention also relates to an engine comprising the gear train according to the present invention.

The invention also relates to a method for mating a gear according to the present invention with at least one further gear with a predetermined backlash. According to such method, the gear ring rotationally mounted around the gear hub is mated with the at least one further gear in the first predetermined position with substantially no backlash after which the displacement means translate the centre of rotation of the gear ring predeterminedly by moving the gear ring and the gear hub with respect to the centre of rotation of the at least one further gear from the first predetermined position to the second predetermined position in which the gear mates with the at least one further gear with the predetermined backlash.

According to preferred embodiments of the method according to the present invention, the centre of rotation of the gear ring is translated from the first predetermined position to the second predetermined position by rotating the gear hub around the inner hub.

According to preferred embodiments of the method according to the present invention, after the centre of rotation of the gear ring has reached the second predetermined position, the gear hub is fixed with respect to the at least one further gear, preferably by bolting of, for example, by means of a transition fit.

According to preferred embodiments of the method according to the present invention, the inner hub is fixed with respect to the first and the second gear, preferably by bolting.

According to preferred embodiments of the method according to the present invention, a gear train according to the invention is made.

According to further preferred embodiments of the method according to the present invention, the gear ring rotationally mounted around the gear hub is mated with the at least two further gears in the first predetermined position with substantially no backlash.

According to preferred embodiments of the method according to the present invention, the engine according to the present invention is made.

The invention also relates to the use of the gear according to the present invention, the gear train according to the present invention and/or the engine according to the present invention.

Other details and advantages of the invention will become apparent from the enclosed figures and description of embodiments of the invention.
Figure 1 shows an overview of a gear train with a gear according to the present invention.
Figure 2 shows a sectional view of the gear shown in figure 1.
Figure 3 shows an alternative embodiment of the gear shown in figures 1 and 2.

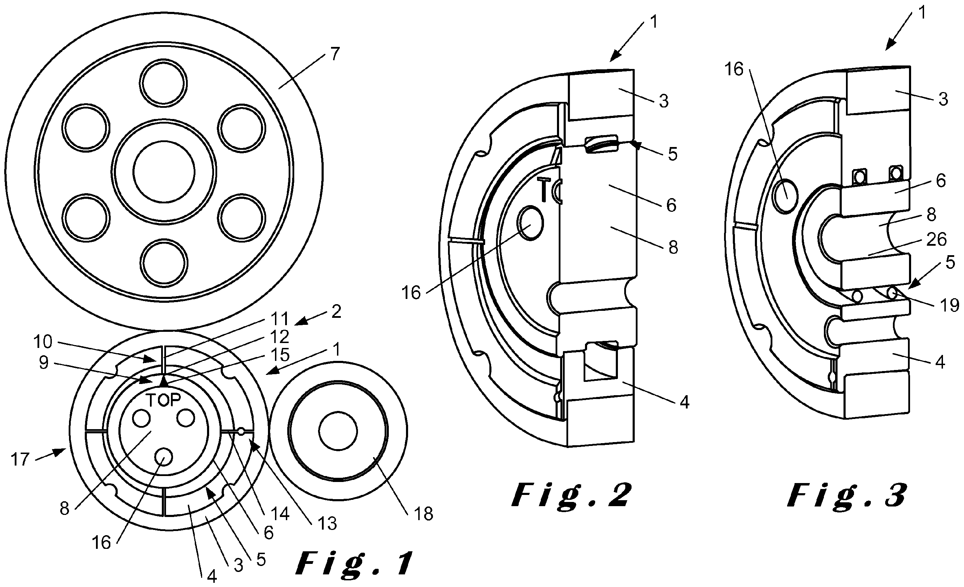

The gear 1 shown in figure 1 mates with a first 7 and a second 18 further gear and thus forms a gear train 17. The gear 1 shown in figure 1 more specifically is an idler gear 2, although this is not critical for the present invention. The gear train 17 can be part of an engine, for example a car engine, although not shown in the figures.

The gear 1 comprises a gear ring 3 which is rotationally mounted around a gear hub 4. The gear ring 3 is shown schematically in figure 1 and no details, such as for example gear teeth applied circumferentially along the circumference of the gear ring 3, are shown. Usually the gear ring 3 is made of metal, although not critical for the present invention, and the gear ring 3 can also be made of, for example, a polymer material depending on the desired characteristics of the gear ring 3 on its turn depending on the desired application of the gear 1.

The gear hub 4 provides a rotational mount for the gear ring 3 and thereto is for example provided with a rotational bearing, for example a ball bearing, a bearing bush, etc. The bearing for reasons of clarity of the figures is not shown in the figures.

Usually the gear hub 4 is made of metal, although not critical for the present invention, and the gear hub 4 can also be made of, for example, a polymer material depending on the desired characteristics of the gear hub 4 on its turn depending on the desired application of the gear 1.

The gear hub 4 comprises an axial gear hub opening 5. In the embodiment shown in the figures, the gear hub opening 5 is substantially circular. This is however not critical for the invention and the hub opening 5 could have other shapes as deemed appropriate by the person skilled in the art.

As shown in figure 1 and 2, the gear hub opening 5 is eccentric with respect to the gear ring 3. However, as shown in figure 3, the opening can also be concentric with respect to the gear ring 3 and the gear hub 4.

The gear 1 further comprises displacement means 6 in the gear hub opening 5. The displacement means 6 are provided for predeterminedly translating the centre of rotation of the gear ring 3 by moving the gear ring 3 and the gear hub 4 with respect to the centre of rotation of at least one further gear 7 from a first predetermined position in which the gear mates with the at least one further gear with substantially no backlash to a second predetermined position in which the gear mates with the at least one further gear with a predetermined backlash.

As shown in figures 1 - 3, the displacement means 6 further preferably comprise an inner hub 8 rotationally engaging the gear hub 4 such that upon rotation of the gear hub 4 around the inner hub 8, the centre of rotation of the gear ring 3 is predeterminedly translated such as to create the predetermined backlash. The inner hub 8 thereto is positioned eccentric with respect to the gear ring 3 and the gear hub 4.

As shown in figure 2, the inner circumference of the hub opening 5 rotationally engages the inner hub 8, more in particular the outer surface of the inner hub 8. Thereto, the inner circumference could comprise a pair of sealing rings or alternative spacing elements 19 as shown in the embodiments shown in figure 3 but not shown in figure 2. The pair of sealing rings or alternative spacing elements 19, if present, may be concentric with respect to the gear hub 4, as would be the case in the embodiment according to figure 2, or may be eccentric with respect to the gear hub 4, as shown in figure 3.

The eccentric position of the inner hub 8 in the gear hub 3 may for example be provided for by the eccentric positioning of the rotational bearing 19 inside the gear hub opening 5, as shown in figure 3, or may for example be provided for by the eccentric positioning of the gear hub opening 5 itself, as shown in figure 2, or even a combination of the two, not shown.

The rotational bearing can be any type of rotational bearing deemed appropriate by the person skilled in the art, for example a ball bearing, etc.

As shown in the figures, the gear 1 preferably comprises at least one bolting hole 16 for fixing the gear hub 4 by bolting. As shown in figure 2, the bolting hole 16 can be provided in the gear hub 4 or can for example be provided in the inner hub 8.

In case the inner hub 8 comprises the at least one bolting hole 16 for fixing the position of the centre of rotation of the gear ring 3 in the second predetermined position by bolting, as for example shown in figure 2, the rolling resistance of the gear ring 3 when rotating around the gear hub 4 preferably is smaller, preferably substantially smaller, than the rolling resistance of the gear hub 4 when rotating around the inner hub 8. In figure 3, for example, the at least one bolting hole 16 is provided in the gear hub 4, allowing the inner hub 8 to be mounted inside the gear hub opening 5 with for example a pair of sealing rings or alternative spacing elements 19.

As shown in the figures, the inner hub 8 and the gear hub 4 preferably comprise at least one marking 9 indicating the rotation to be followed by the gear hub 4 around the inner hub 8 such as to create the predetermined backlash. As shown in the figures, the marking 9 preferably comprises a first pair 10 of marks 12, 11 respectively on the inner hub 8 and the gear hub 4 indicating a first predetermined rotational position of the inner hub 8 with respect to the gear hub 4 in the first predetermined position in which the gear 1 mates with the at least one further gear 7 and a second pair 13 of marks 15, 14 respectively on the inner hub 8 and the gear hub 4 indicating a second predetermined rotational position of the inner hub 8 with respect top the gear hub 4 in the second predetermined position in which the gear 1 mates with the at least one further gear 7 with the predetermined backlash.

As especially shown in for example figure 1, the inner hub 8 comprises a triangular indicator 12 with the indication "TOP" to indicate that the triangle 12 should be situated at the mark 11 marked on the ring hub 4 when putting the gear 1 in the first predetermined position with respect to the further gear 7. When the gear hub 4 is then rotated clockwise with respect to the inner hub 8 till the mark 12 coincides with the mark 14 on the gear hub 4 of the pair 13, the centre of rotation of the gear ring 3 is translated by moving the gear ring 3 and the gear hub 4 with respect to the centre of rotation of at least one further gear 7 from the first predetermined position in which the gear mates with the at least one further gear with substantially no backlash to the second predetermined position in which the gear mates with the at least one further gear with a predetermined backlash. In such an embodiment, at least one of the marks of the second pair of marks is one of the marks of the first pair of marks. In the case shown in figure 1, the inner hub has one mark whereas the gear hub has at least two marks such that in the first predetermined position the mark of the inner hub coincides with a first of the marks on the gear hub and in the second predetermined position the mark of the inner hub coincides with the a second of the marks on the gear hub, different from the first of the marks on the gear hub.

As can be seen in the figures additional marks can be added to the gear 1, for example to further increase the accuracy with which the inner hub 8 can be positioned inside the gear hub 4.

To mount the gear 1 according to figure 2 in a gear train with a predetermined backlash, the gear 1 shown in figure 2 will first be positioned with the centre of rotation of the gear ring 3 in the first predetermined position after which it will be fastened in the gear train by using the bolting holes 16. Then, the inner hub 8 will be rotated such as to bring the centre of rotation of the gear ring 3 to the second predetermined position, using the preferred transition fit between the inner hub 8 and the gear hub 4. While in use, the gear ring 3 will rotate around the gear hub 4, whereas due to the relative larger resistance to rolling, the gear hub 4 will substantially retain its position with respect to the inner hub 8.

To mount the gear 1 according to figure 3 in a gear train with a predetermined backlash, the gear 1 shown in figure 3 will first be positioned with the centre of rotation of the gear ring 3 in the first predetermined position after which it will be fastened in the gear train by using the at least one additional bolting hole 26 in the inner hub 8. Then, the gear hub 4 will be rotated with respect to the inner hub 8 such as to bring the centre of rotation of the gear ring 3 to the second predetermined position, using the preferred sealing rings or alternative spacing elements 19 as shown in figure 3. When the centre of rotation of the gear ring 3 reaches the second predetermined position, the gear 1 is bolted in this location using the at least one bolting hole 16. The bolt fixing the gear 1 using the additional bolting hole in the inner hub 8 using the bolting hole 26 can then be removed or can remain. The means for fixing the gear 1 using the bolting hole 16 are preferably provided to accommodate the movement of the centre of rotation of the gear ring 3 from the first to the second predetermined position. For example, the bolting hole 16 can have a diameter and/or shape allowing a bolt provided through it with some leeway during movement of the centre of rotation of the gear ring 3. On the other hand, the hole in the piece to which the gear 1 is attached can be provided with holes providing the necessary leeway for the bolt extending through the bolting hole 16. While in use, the gear ring 3 will rotate around the gear hub 4, whereas due to the relative larger resistance to rolling, the gear hub 4 will substantially retain its position with respect to the inner hub 8.

## Claims

1. Idler Gear (1, 2) comprising a gear ring (3) rotationally mounted around a gear hub (4), the gear hub (4) comprising an axial gear hub opening (5), **wherein** the gear (1) comprises displacement means (6) in the gear hub opening (5), the displacement means (6) being provided for predeterminedly translating the centre of rotation of the gear ring (3) by moving the gear ring (3) and the gear hub (4) with respect to the centre of rotation of at least one further gear (7) from a first predetermined position in which the gear mates with the at least one further gear with substantially no backlash to a second predetermined position in which the gear mates with the at least one further gear with a predetermined backlash, **wherein** the gear hub opening (5) is substantially circular, **wherein** the displacement means (6) comprise a further inner hub (8) rotationally engaging the gear hub (4) such that upon rotation of the gear hub (4) around the inner hub (8), the centre of rotation of the gear ring (3) is predeterminedly translated such as to create the predetermined backlash, **wherein** the inner hub (8) and the gear hub (4) are eccentrically positioned with respect to each other, **wherein** the inner hub (8) comprises at least one bolting hole (16) for fixing the position of the centre of rotation of the gear ring (3) in the second predetermined position by bolting, **characterised in that** the inner hub (8) and the gear hub (4) comprise at least one marking (9) indicating the rotation to be followed by the gear hub (4) around the inner hub (8) such as to create the predetermined backlash, **wherein** the marking (9) comprises a first pair (10) of marks (11, 12) respectively on the inner hub (8) and the gear hub (4) indicating a first predetermined rotational position of the inner hub (8) with respect to the gear hub (4) in the first predetermined position in which the gear (1) mates with the at least one further gear (7) and a second pair (13) of marks (14, 15) respectively on the inner hub (8) and the gear hub (4) indicating a second predetermined rotational position of the inner hub (8) with respect to the gear hub (4) in the second predetermined position in which the gear (1) mates with the at least one further gear (7) with the predetermined backlash.

2. Gear according to claim 1, **wherein** the gear hub opening (5) is eccentric with respect to the gear ring (3).

3. Gear according to claim 2, **wherein** the inner hub (8) is eccentrically positioned in the gear hub opening (5) and wherein the gear hub opening (5) is concentric with respect to the gear hub (4).

4. Gear according to any one of claims 1 - 3, **wherein** the gear (1) comprises at least one bolting hole (16) for fixing the gear hub (4) by bolting.

5. Gear according to any one of claims 1 - 4, **wherein** the inner hub (8) is connected to the gear hub (4) with a transition fit.

6. Gear train (17) with a gear (1), preferably an idler gear (2), as claimed in any one of the preceding claims mating with at least one further gear (7), preferably at least two further gears (7, 18).

7. Gear train (17) as claimed in claim 6, **wherein** the gear (1) mates with the at least one further gear (7) with the predetermined backlash.

8. Engine comprising the gear train (17) according to any one of claims 6 or 7.

9. Method for mating a gear (1) according to any one of claims 1 - 5 with at least one further gear (7) with a predetermined backlash, **wherein** the gear ring (3) rotationally mounted around the gear hub (4) is mated with the at least one further gear (7) in the first predetermined position with substantially no backlash after which the displacement means (6) translate the centre of rotation of the gear ring (3) predeterminedly by moving the gear ring (3) and the gear hub (4) with respect to the centre of rotation of the at least one further gear (7) from the first predetermined position to the second predetermined position in which the gear (1) mates with the at least one further gear (7) with the predetermined backlash.

10. Method according to claim 9 for mating a gear (1) according to any one of claims 1 - 5 with at least one further gear (7) with a predetermined backlash, **wherein** the centre of rotation of the gear ring (3) is translated from the first predetermined position to the second predetermined position by rotating the gear hub (4) around the inner hub (8).

11. Method according to claim 10 for mating a gear (1) according to any one of claims 1 - 5, preferably claim 4, with at least one further gear (7) with a predetermined backlash, **wherein** after the centre of rotation of the gear ring (3) has reached the second predetermined position, the gear hub (4) is fixed with respect to the at least one further gear (7), preferably by bolting.

12. Method according to claim 11 for mating a gear (1) according to any one of claims 1 - 5 with at least one further gear (7) with a predetermined backlash, **wherein** the inner hub (8) is fixed with respect to the at least one further gear (7), preferably by bolting.

13. Method according to any one of claims 9 - 12 for making a gear train (17) as claimed in claim 6 or 7.

14. Method according to claim 13, **wherein** the gear ring (3) rotationally mounted around the gear hub (4) is mated with the at least two further gears (7, 18) in the first predetermined position with substantially no backlash.

15. Method according to claim 13 or 14 for making the engine according to claim 8.

16. Use of the gear (1) according to any one of claims 1 - 5, the gear train (17) according to claim 6 or 7 and/or the engine according to claim 8.

## Patentansprüche

1. Leerlaufgetriebe (1, 2), welches einen Zahnkranz (3) umfasst, der rotierend rund um eine Getriebenabe (4) montiert ist, wobei die Getriebenabe (4) eine axiale Getriebenabenöffnung (5) umfasst, wobei das Getriebe (1) Verdrängungsmittel (6) in der Getriebenabenöffnung (5) umfasst, wobei diese Verdrängungsmittel (6) bereitgestellt sind, um den Drehpunkt des Zahnkranzes (3) vorbestimmt durch Bewegen des Zahnkranzes (3) und der Getriebenabe (4) in Bezug zum Drehpunkt zumindest eines weiteren Getriebes (7) aus einer ersten vorbestimmten Position, in der das Getriebe mit dem zumindest einen weiteren Getriebe mit im Wesentlichen keinem Spiel verbunden ist, in eine zweite vorbestimmte Position zu versetzen, in der das Getriebe mit dem zumindest einen weiteren Getriebe mit einem vorbestimmten Spiel verbunden ist, wobei die Getriebenabenöffnung (5) im Wesentlichen kreisförmig ist, wobei die Verdrängungsmittel (6) eine weitere Innennabe (8) umfassen, welche rotierend so in die Getriebenabe (4) eingreift, dass der Drehpunkt des Zahnkranzes (3) bei Rotation der Getriebenabe (4) rund um die Innennabe (8) so vorbestimmt versetzt wird, dass das vorbestimmte Spiel entsteht, wobei die Innennabe (8) und die Getriebenabe (4) exzentrisch zueinander positioniert sind, wobei die Innennabe (8) zumindest eine Bolzenbohrung (16) umfasst, um die Position des Drehpunkts des Zahnkranzes (3) in der zweiten vorbestimmten Position durch Verschrauben zu fixieren, **dadurch gekennzeichnet, dass** die Innennabe (8) und die Getriebenabe (4) zumindest eine Markierung (9) umfassen, welche die Rotation angibt, die die Getriebenabe (4) rund um die Innennabe (8) einhalten muss, um das vorbestimmte Spiel zu erzeugen, wobei die Markierung (9) ein erstes Paar (10) von Markierungszeichen (11, 12) respektive auf der Innennabe (8) und der Getriebenabe (4) umfasst, welche eine erste vorbestimmte Drehposition der Innennabe (8) in Bezug zur Getriebenabe (4) in der ersten vorbestimmten Position angeben, in der das Getriebe (1) mit dem zumindest einen weiteren Getriebe (7) verbunden ist, und ein zweites Paar (13) von Markierungszeichen (14, 15) respektive auf der Innennabe (8) und der Getriebenabe (4), welche eine zweite vorbestimmte Drehposition der Innennabe (8) in Bezug zur Getriebenabe (4) in der zweiten vorbestimmten Position angeben, in der das Getriebe (1) mit dem zumindest einen weiteren Getriebe (7) mit dem vorbestimmten Spiel verbunden ist.

2. Getriebe nach Anspruch 1, wobei die Getriebenabenöffnung (5) exzentrisch in Bezug zum Zahnkranz (3) ist.

3. Getriebe nach Anspruch 2, wobei die Innennabe (8) exzentrisch in der Getriebenabenöffnung (5) positioniert ist und wobei die Getriebenabenöffnung (5) konzentrisch in Bezug zur Getriebenabe (4) ist.

4. Getriebe nach irgendeinem der Ansprüche 1 bis 3, wobei das Getriebe (1) zumindest eine Bolzenbohrung (16) umfasst, um die Getriebenabe (4) durch Verschrauben zu fixieren.

5. Getriebe nach irgendeinem der Ansprüche 1 bis 4, wobei die Innennabe (8) mit einer Übergangspassung mit der Getriebenabe (4) verbunden ist.

6. Getriebezug (17) mit einem Getriebe (1), bevorzugt einem Leerlaufgetriebe (2), wie beansprucht in irgendeinem der vorigen Ansprüche, welches mit zumindest einem weiteren Getriebe (7), bevorzugt mit mindestens zwei weiteren Getrieben (7, 18) verbunden ist.

7. Getriebezug (17) wie beansprucht in Anspruch 6, wobei das Getriebe (1) mit dem zumindest einen weiteren Getriebe (7) mit dem vorbestimmten Spiel verbunden ist.

8. Motor, welcher den Getriebezug (17) nach irgendeinem der Ansprüche 6 oder 7 umfasst.

9. Verfahren zur Verbindung eines Getriebes (1) nach irgendeinem der Ansprüche 1 bis 5 mit zumindest einem weiteren Getriebe (7) mit einem vorbestimmten Spiel, wobei der Zahnkranz (3), der rotierend rund um die Getriebenabe (4) montiert ist, mit dem zumindest einen weiteren Getriebe (7) in der ersten vorbestimmten Position mit im Wesentlichen keinem Spiel verbunden ist, wonach die Verdrängungsmittel (6) den Drehpunkt des Zahnkranzes (3) vorbestimmt durch Bewegen des Zahnkranzes (3) und der Getriebenabe (4) in Bezug zum Drehpunkt des zumindest einen weiteren Getriebes (7) aus der ersten vorbestimmten Position in die zweite vorbestimmte Position versetzen, in der das Getriebe (1) mit dem zumindest einen weiteren Getriebe (7) mit dem vorbestimmten Spiel verbunden ist.

10. Verfahren nach Anspruch 9 zum Verbinden eines Getriebes (1) nach irgendeinem der Ansprüche 1 bis 5 mit zumindest einem weiteren Getriebe (7) mit einem vorbestimmten Spiel, wobei der Drehpunkt des Zahnkranzes (3) durch Drehen der Getriebenabe (4) rund um die Innennabe (8) aus der ersten vorbestimmten Position in die zweite vorbestimmte Position versetzt wird.

11. Verfahren nach Anspruch 10 zum Verbinden eines Getriebes (1) nach irgendeinem der Ansprüche 1 bis 5, bevorzugt Anspruch 4, mit zumindest einem weiteren Getriebe (7) mit einem vorbestimmten Spiel, wobei die Getriebenabe (4), nachdem der Drehpunkt des Zahnkranzes (3) die zweite vorbestimmte Position erreicht hat, in Bezug zum zumindest einen weiteren Getriebe (7) fixiert wird, bevorzugt durch Verschrauben.

12. Verfahren nach Anspruch 11 zum Verbinden eines Getriebes (1) nach irgendeinem der Ansprüche 1 bis 5 mit zumindest einem weiteren Getriebe (7) mit einem vorbestimmten Spiel, wobei die Innennabe (8) in Bezug zum zumindest einen weiteren Getriebe (7) fixiert wird, bevorzugt durch Verschrauben.

13. Verfahren nach irgendeinem der Ansprüche 9 bis 12 zur Herstellung eines Getriebezuges (17), wie beansprucht in Anspruch 6 oder 7.

14. Verfahren nach Anspruch 13, wobei der Zahnkranz (3), der rotierend rund um die Getriebenabe (4) montiert ist, mit den zumindest zwei weiteren Getrieben (7, 18) in der ersten vorbestimmten Position mit im Wesentlichen keinem Spiel verbunden ist.

15. Verfahren nach Anspruch 13 oder 14 zur Herstellung des Motors nach Anspruch 8.

16. Verwendung des Getriebes (1) nach irgendeinem der Ansprüche 1 bis 5, des Getriebezuges (17) nach Anspruch 6 oder 7 und/oder des Motors nach Anspruch 8.

## Revendications

1. Engrenage fou (1, 2) comprenant un anneau d'engrenage (3) monté de manière rotative autour d'un moyeu d'engrenage (4), le moyeu d'engrenage (4) comprenant une ouverture de moyeu d'engrenage axial (5), **dans lequel** l'engrenage (1) comprend des moyens de déplacement (6) dans l'ouverture de moyeu d'engrenage (5), les moyens de déplacement (6) étant prévus pour la translation prédéterminée du centre de rotation de l'anneau d'engrenage (3) par déplacement de l'anneau d'engrenage (3) et du moyeu d'engrenage (4) par rapport au centre de rotation d'au moins un autre engrenage (7) d'une première position prédéterminée dans laquelle l'engrenage s'accouple avec l'au moins un autre engrenage sensiblement sans aucun jeu dans une seconde position prédéterminée, dans laquelle l'engrenage s'accouple avec l'au moins un autre engrenage avec un jeu prédéterminé, **dans lequel** l'ouverture de moyeu d'engrenage (5) est sensiblement circulaire, **dans lequel** les moyens de déplacement (6) comprennent un autre moyeu intérieur (8) mettant en prise en rotation le moyeu d'engrenage (4) de sorte que suite à la rotation du moyeu d'engrenage (4) autour du moyeu intérieur (8), le centre de rotation de l'anneau d'engrenage (3) soit translaté de manière prédéterminée de sorte à créer le jeu prédéterminé, **dans lequel** le moyeu intérieur (8) et le moyeu d'engrenage (4) sont positionnés excentriquement l'un par rapport à l'autre, **dans lequel** le moyeu intérieur (8) comprend au moins un trou de boulonnage (16) pour la fixation de la position du centre de rotation de l'anneau d'engrenage (3) dans la seconde position prédéterminée par boulonnage, **caractérisé en ce que** le moyeu intérieur (8) et le moyeu d'engrenage (4) comprennent au moins un marquage (9) indiquant la rotation à suivre par le moyeu d'engrenage (4) autour du moyeu intérieur (8) de sorte à créer le jeu prédéterminé, **dans lequel** le marquage (9) comprend une première paire (10) de marques (11, 12) respectivement sur le moyeu intérieur (8) et le moyeu d'engrenage (4) indiquant une première position de rotation prédéterminée du moyeu intérieur (8) par rapport au moyeu d'engrenage (4) dans la première position prédéterminée, dans laquelle l'engrenage (1) s'accouple avec l'au moins un autre engrenage (7) et une seconde paire (13) de marques (14, 15) respectivement sur le moyeu intérieur (8) et le moyeu d'engrenage (4) indiquant une seconde position de rotation prédéterminée du moyeu intérieur (8) par rapport au moyeu d'engrenage (4) dans la seconde position prédéterminée, dans laquelle l'engrenage (1) s'accouple avec l'au moins un autre engrenage (7) avec le jeu prédéterminé.

2. Engrenage selon la revendication 1, **dans lequel** l'ouverture de moyeu d'engrenage (5) est excentrique par rapport à l'anneau d'engrenage (3).

3. Engrenage selon la revendication 2, **dans lequel** le moyeu intérieur (8) est positionné de manière excentrique dans l'ouverture de moyeu d'engrenage (5) et dans lequel l'ouverture de moyeu d'engrenage (5) est concentrique par rapport au moyeu d'engrenage (4).

4. Engrenage selon l'une quelconque des revendications 1 à 3, **dans lequel** l'engrenage (1) comprend au moins un trou de boulonnage (16) pour la fixation du moyeu d'engrenage (4) par boulonnage.

5. Engrenage selon l'une quelconque des revendications 1 à 4, **dans lequel** le moyeu intérieur (8) est raccordé au moyeu d'engrenage (4) avec un ajustement de transition.

6. Train d'engrenage (17) avec un engrenage (1), de préférence un engrenage fou (2), selon l'une quelconque des revendications précédentes s'accouplant avec au moins un autre engrenage (7), de préférence au moins deux autres engrenages (7, 18).

7. Train d'engrenage (17) selon la revendication 6, **dans lequel** l'engrenage (1) s'accouple avec l'au moins un autre engrenage (7) avec le jeu prédéterminé.

8. Moteur comprenant le train d'engrenage (17) selon l'une quelconque des revendications 6 ou 7.

9. Procédé d'accouplement d'un engrenage (1) selon l'une quelconque des revendications 1 à 5 avec au moins un autre engrenage (7) avec un jeu prédéterminé, **dans lequel** l'anneau d'engrenage (3) monté en rotation autour du moyeu d'engrenage (4) est accouplé à l'au moins un autre engrenage (7) dans la première position prédéterminée sensiblement sans aucun jeu, après quoi les moyens de déplacement (6) translatent le centre de rotation de l'anneau d'engrenage (3) de manière prédéterminée par déplacement de l'anneau d'engrenage (3) et du moyeu d'engrenage (4) par rapport au centre de rotation de l'au moins un autre engrenage (7) de la première position prédéterminée à la seconde position prédéterminée, dans laquelle l'engrenage (1) s'accouple avec l'au moins un autre engrenage (7) avec le jeu prédéterminé.

10. Procédé selon la revendication 9, pour l'accouplement d'un engrenage (1) selon l'une quelconque des revendications 1 à 5 avec au moins un autre engrenage (7) avec un jeu prédéterminé, **dans lequel** le centre de rotation de l'anneau d'engrenage (3) est translaté de la première position prédéterminée à la seconde position prédéterminée par rotation du moyeu d'engrenage (4) autour du moyeu intérieur (8).

11. Procédé selon la revendication 10 pour l'accouplement d'un engrenage (1) selon l'une quelconque des revendications 1 à 5, de préférence la revendication 4, avec au moins un autre engrenage (7) avec un jeu prédéterminé, **dans lequel** après que le centre de rotation de l'anneau d'engrenage (3) a atteint la seconde position prédéterminée, le moyeu d'engrenage (4) est fixé par rapport à l'au moins un autre engrenage (7), de préférence par boulonnage.

12. Procédé selon la revendication 11 pour l'accouplement d'un engrenage (1) selon l'une quelconque des revendications 1 à 5, avec au moins un autre engrenage (7) avec un jeu prédéterminé, **dans lequel** le moyeu intérieur (8) est fixé par rapport à l'au moins un autre engrenage (7), de préférence par boulonnage.

13. Procédé selon l'une quelconque des revendications 9 à 12, pour la fabrication d'un train d'engrenage (17) selon la revendication 6 ou 7.

14. Procédé selon la revendication 13, **dans lequel** l'anneau d'engrenage (3) monté en rotation autour du moyeu d'engrenage (4) est accouplé aux au moins deux autres engrenages (7, 18) dans la première position prédéterminée sensiblement sans aucun jeu.

15. Procédé selon la revendication 13 ou 14 pour la fabrication du moteur selon la revendication 8.

16. Utilisation de l'engrenage (1) selon l'une quelconque des revendications 1 à 5, du train d'engrenage (17) selon la revendication 6 ou 7 et/ou du moteur selon la revendication 8.
